# EUROPEAN PATENT SPECIFICATION

(11) **EP 4 647 617 B1**
(45) Date of publication and mention of the grant of the patent: **25.11.2026**
(21) Application number: 25159614.4
(22) Date of filing: 24.02.2025
(51) Int. Cl.: F16B 37/04

(54) **NUT RETAINER ASSEMBLY, BLIND FASTENING SYSTEM, AND FASTENING METHOD**
MUTTERHALTEANORDNUNG, BLINDBEFESTIGUNGSSYSTEM UND BEFESTIGUNGSVERFAHREN
ENSEMBLE DE RETENUE D'ÉCROU, SYSTÈME DE FIXATION AVEUGLE ET PROCÉDÉ DE FIXATION

(30) Priority: 06.05.2024 US 202418655953
(43) Date of publication of application: 12.11.2025
(73) Proprietor: The Boeing Company, Arlington, VA 22202 (US)
(72) Inventor: ARTHUR, Shane E., Arlington, VA, 22202 (US); SIMPSON, Blake A., Arlington, VA, 22202 (US); WILKINSON, Marianne E., Arlington, VA, 22202 (US); SPENCER, Scott M., Arlington, VA, 22202 (US)
(74) Representative: Hoffmann Eitle

(56) References cited:
- US-A- 4 295 766
- US-A1- 2007 053 761
- US-A1- 2019 331 160
- US-A1- 2022 316 518

## Description

### FIELD

The present application relates to the field of nut retainer assemblies, blind fastening systems, and fastening methods.

### BACKGROUND

The development of fastening systems, particularly for securing components in areas with limited accessibility, has long been a significant engineering challenge. Conventional fastening methods often require access to both sides of the assembly for effective installation, which is not feasible in tightly packed or closed-off spaces. This issue is particularly prevalent in industries such as aerospace, automotive, and construction, where assemblies are often compact and access to the back side of structures is restricted. The limitations of traditional methods can lead to increased labor, time, and tooling costs, which are impractical and economically inefficient.

Accordingly, those skilled in the art continue with research and development in the field of fastening technologies, particularly focusing on designs that can be effectively implemented in constrained spaces without the need for rear access. Innovations in this field aim to provide robust, durable, and easy-to-install fastening solutions that reduce the overall complexity and cost of assembly processes, while also improving the reliability and performance of the fastening system.

For example, US 2022 / 0316518 A1, according to its abstract, discloses a fastening system for aerospace vehicles including a dielectric nut retainer strip formed of dielectric material and having at least one fastener thru hole and at least one cap receiver portion. Also included are an anti-rotation nut retainer portion integrally formed in the dielectric nut retainer adjacent to the at least one fastener thru hole, a cap configured to mate with the at least one cap receiver portion, a fastener covered in a conductive coating, and an anti-rotation nut configured to fit in the anti-rotation nut retainer portion and couple with the fastener.

US 2007 / 0053761 A1, according to its abstract, describes a sealed rivetless nut plate which includes a retainer, a nut and a gasket, all retained in a shroud. The nut includes a threaded throughbore for threadably receiving a fastener as well as a base portion which includes either holes or slots which receive corresponding protrusions or dimples on the retainer. Alternatively, the base portion of the nut can include protrusions or dimples with the retainer providing corresponding holes or slots. Regardless, this feature is configured to provide a specific amount of x-axis and y-axis floatation. The shroud is folded under the retainer, thereby keeping the assembly intact. The shroud allows only a nominal amount of movement of the nut in the vertical axis. Before installation, a mandrel is engaged in assembly. During installation, the mandrel is pulled out, causing a tubular portion of the retainer to expand, against a workpiece, thereby securing the sealed rivetless nut plate in position.

US 4,295,766 B1 states, according to its abstract, a self-aligning dome nut having a base member for connection into a hole or aperture of a mounting plate by a pressing operation. The base member has a neck portion on one side for connection into the hole and a cavity on its other side into which a nut member is loosely positioned. A protective dome encloses the cavity and covers the nut member. The dome is connected to the base member to leave an exposed portion on its other side for direct application of a clamping force during attachment of the dome nut to the support member. An insulting washer is disposed around the neck portion of the base member between it and the mounting plate, the insulating washer is sized to electrically isolate the nut from the support member and preclude electrical arcing therebetween.

### SUMMARY

The above-described problems are addressed by way of a nut retainer assemblies for a blind fastener system according to independent claim 1, a blind fastening system according to independent claim 10 and/or a fastening method according to independent claim 14. Distinct embodiments are derivable from the dependent claims.

Other examples of the disclosed nut retainer assemblies, blind fastening systems, and fastening methods will become apparent from the following detailed description, the accompanying drawings and the appended claims.

### BRIEF DESCRIPTION OF THE DRAWINGS

Fig. 1: An exploded perspective view of a nut retainer assembly, illustrating the disassembled components and their spatial relationship before assembly.
Fig. 2: A perspective view of the assembled nut retainer assembly of Fig. 1, showing the components after they have been put together.
Fig. 3: A cross-sectional view of the nut retainer assembly of Fig. 1, providing insight into the internal arrangement and interaction of the components.
Fig. 4: A cross-sectional view depicting the nut retainer assembly of Fig. 1 in use, securing a blind fastener within a structure, demonstrating the application and effectiveness of the assembly.
Fig. 5: An exploded perspective view of a second example of the nut retainer assembly, showing a different threading configuration with disassembled components.
Fig. 6: A perspective view of the second example of the nut retainer assembly of Fig. 5 fully assembled, highlighting the revised threading arrangement.
Fig. 7: A cross-sectional view of the second nut retainer assembly of Fig. 5, showing the internal component layout similar to Fig. 3 but with the alternative threading.
Fig. 8: A cross-sectional view showing the second nut retainer assembly of Fig. 5 in operational use, securing a blind fastener within a structure.
Fig. 9: An exploded perspective view of a third example of the nut retainer assembly, this time including a two-part swageable base assembly for a more modular design.
Fig. 10: A perspective view showing the third example of the nut retainer assembly of Fig. 9 assembled, integrating the two-part swageable base.
Fig. 11: A cross-sectional view of the third example of the nut retainer assembly Fig. 9, providing a detailed look at the interaction between the multiple components of the swageable base.
Fig. 12: A cross-sectional view demonstrating the third example of the nut retainer assembly Fig. 9 in use.
Fig. 13: Illustrates the method for installing a nut retainer assembly in a blind fastening system, focusing on the process from predrilling to final assembly.
Fig. 14: A block diagram of aircraft production and service methodology, outlining the various stages involved from specification and design to maintenance and service of an aircraft.
Fig. 15: A schematic illustration of an aircraft, showing the integration of various systems such as propulsion, electrical, and environmental, within the airframe.

### DETAILED DESCRIPTION

The present description relates to a nut retainer assembly that can be used for a blind fastening system to attach a fastener to a structure. The nut retainer assembly of the present description is designed to securely attach the fastener to the structure without the need for access to the back side of the structure. The nut retainer assembly is especially useful in tight or confined spaces where traditional fastening methods are not feasible.

One of the features of this nut retainer assembly is the inclusion of a swageable section. Swaging is a process of plastically deforming a material to secure it in place. In the context of the nut retainer assembly, the swageable section is designed to be deformed within a through hole of a structure -generally, the material to which the fastener is being attached. This deformation occurs once the assembly is inserted into the through hole; tools or mechanical force can then be used to expand and deform the swageable section, causing it to tightly grip the walls of the hole.

This gripping action ensures that the nut retainer assembly is securely fixed within the substrate, providing a robust anchoring point for attachment of the fastener. By doing this, the assembly facilitates the attachment of fasteners in applications where traditional nut-and-bolt tightening is not possible due to space constraints or lack of access to both sides of the assembly.

The following description and figures illustrate particular examples of the disclosed nut retainer assemblies that incorporate different types of swageable sections. These examples are not exhaustive or limiting, and variations or modifications of these examples are possible within the scope of the present description.

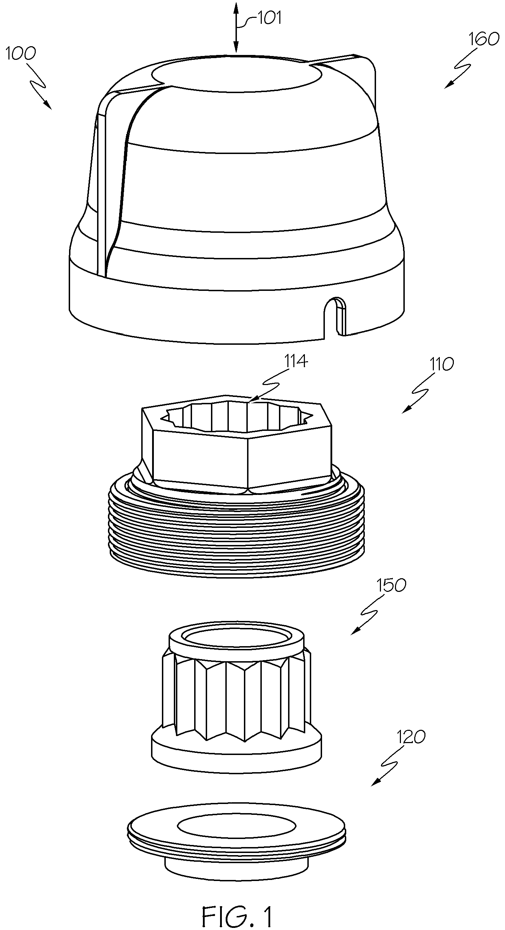

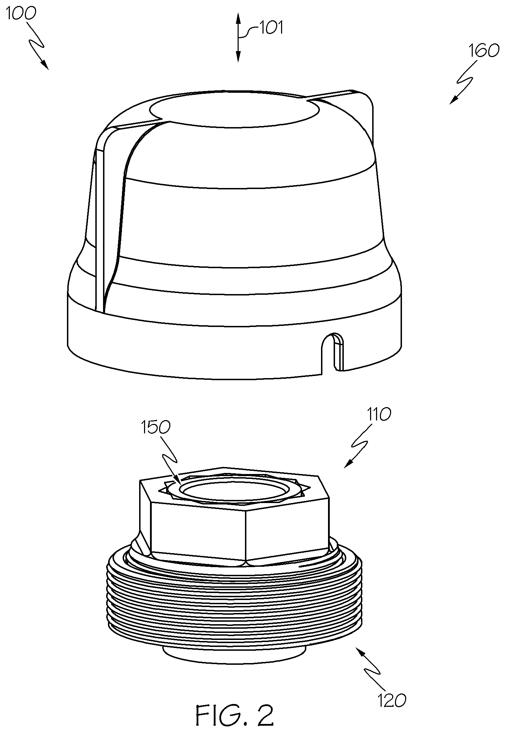

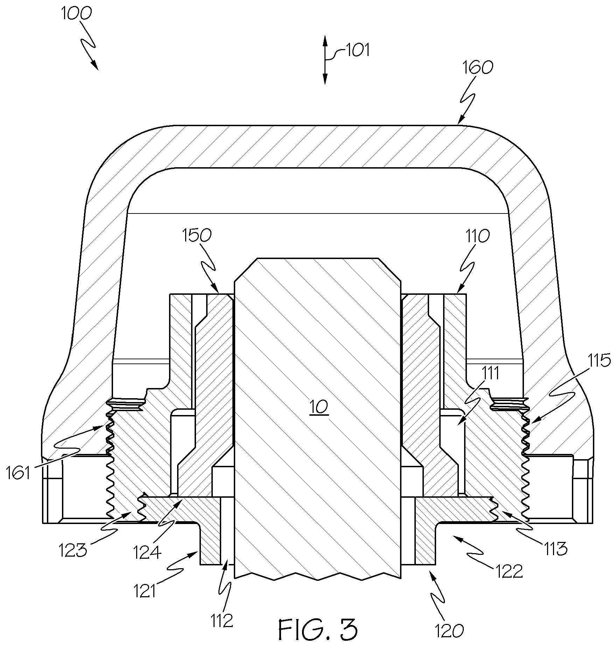

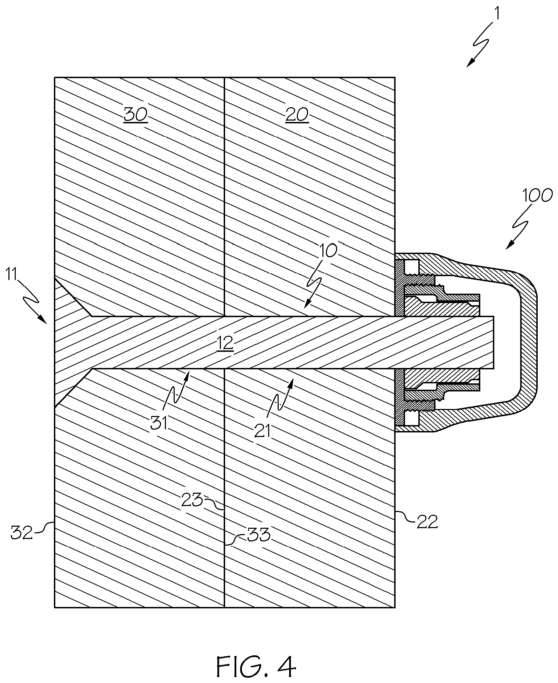

Figs. 1-4 of the present description provide a first example of a nut retainer assembly that can be used to attach a fastener to a structure. Figs. 1-4 show different views of this nut retainer assembly. Fig. 1 illustrates an exploded perspective view of the nut retainer assembly. Fig. 2 illustrates a perspective view showing how the nut retainer assembly looks when it is assembled. Fig. 3 shows a cross-sectional view of the nut retainer assembly. Fig. 4 shows a cross-sectional view of the nut retainer assembly when it is used to secure a blind fastener to a structure.

Nut Retainer Assembly 100: Referring to Figs. 1-4, the first exemplary nut retainer assembly 100 includes a nut retainer 110 and a swageable base 120. The nut retainer 110 and the swageable base 120 are aligned along a longitudinal axis 101. The nut retainer 110 generally includes an interior cavity 111 for securely holding a fastener nut 150 therein, an opening 112 for receiving a fastener 10 therethrough, and a threaded retainer coupling portion 113 for coupling to the swageable base 120. The swageable base 120 generally includes a swageable section 121, a radial flange 122 extending outwardly from the swageable section 121, and a threaded base coupling portion 123 for engaging with the threaded retainer coupling portion 113 to couple the swageable base 120 with the nut retainer 110. The exemplary nut retainer assembly 100 may include additional components not mentioned herein, such as washers, spacers, seals, bushings, or other elements that may be useful for certain applications or environments. The listed components, i.e., the nut retainer 110 and the swageable base 120, may each be formed as a single unitary component or may be formed from multiple subcomponents assembled to form the nut retainer 110 or the swageable base 120.

Nut Retainer 110: The nut retainer 110 is a component of the nut retainer assembly 100 that holds the fastener nut 150 in place and allows the fastener 10 to be attached to the structure. The nut retainer 110 has several features that will be described in more detail below, such as an interior cavity 111, an opening 112, and a threaded retainer coupling portion 113. These features are designed to provide a secure and reliable connection between the fastener 10, the fastener nut 150, and the structure. The nut retainer 110 may have other features that are not shown or described in detail herein, such as ribs, grooves, slots, holes, or protrusions that may enhance the strength, stability, or functionality of the nut retainer 110. The nut retainer 110 may be made of any suitable material that can withstand the mechanical stress and environmental conditions of the application, such as metal, plastic, composite, or ceramic. The nut retainer 110 may be manufactured by any suitable process, such as casting, forging, molding, machining, or forming. The nut retainer 110 may be coated, plated, painted, or treated with any suitable substance or method that may improve the corrosion resistance, wear resistance, or appearance of the nut retainer 110.

The nut retainer 110 is preferably composed of a metal material that can provide high strength, durability, and resistance to corrosion and wear. The metal material may be selected from a variety of metals or alloys that have suitable mechanical and chemical properties for the application. Preferably, the nut retainer 110 comprises a metal material, such as at least one of titanium, tungsten carbide, tungsten, high-strength corrosion-resistant steel, and stainless steel. These metal materials are examples of metals or alloys that have high hardness, toughness, and fatigue resistance, as well as low density, thermal expansion, and susceptibility to galvanic corrosion. These metal materials may also have good weldability, machinability, and formability, which may facilitate the manufacturing and assembly of the nut retainer 110. Alternatively, the nut retainer 110 may comprise other metal materials that have similar characteristics to the aforementioned metal materials, depending on the availability, cost, and performance of the metal materials. The nut retainer 110 may comprise a single metal material or a combination of different metal materials, depending on the desired properties and functions of the nut retainer 110. For example, the nut retainer 110 may comprise a core of one metal material and a coating of another metal material, or may comprise layers or segments of different metal materials. The nut retainer 110 may also comprise non-metallic materials, such as ceramic, composite, or plastic, in addition to or instead of the metal materials, depending on the application and the requirements of the nut retainer assembly 100.

Interior Cavity 111: The interior cavity 111 of the nut retainer 110 is generally a hollow space that can accommodate the fastener nut 150 and allow the fastener 10 to pass through. The interior cavity 111 may have a diameter that is slightly larger than the diameter of the fastener nut 150, so that the fastener nut 150 can be inserted or removed from the interior cavity 111 with minimal friction. The interior cavity 111 may also has a depth that is sufficient to cover the height of the fastener nut 150, so that the fastener nut 150 is fully enclosed by the nut retainer 110 when the nut retainer assembly 100 is assembled. The interior cavity 111 may have a smooth or rough surface, depending on the manufacturing process and the desired fit of the fastener nut 150. The interior cavity 111 may have a uniform or variable cross-section, depending on the shape and size of the fastener nut 150 and the nut retainer 110. The interior cavity 111 may be adapted to different types and sizes of fastener nuts 150, depending on the application and the requirements of the nut retainer assembly 100.

Opening 112: The opening 112 of the nut retainer 110 is an aperture that allows the fastener 10 to pass into the nut retainer 110 and engage with the fastener nut 150. The opening 112 may be located at the center of the nut retainer 110 or offset from the center, depending on the design and alignment of the nut retainer assembly 100. The opening 112 may have a circular shape or any other suitable shape that matches the shape of the fastener 10. The opening 112 may have a diameter that is slightly larger than the diameter of the fastener 10, so that the fastener 10 can be inserted or removed from the opening 112 with minimal friction. Alternatively, the opening 112 may have a diameter that is smaller than the diameter of the fastener 10, so that the fastener 10 can be pressed or snapped into the opening 112 with a tight fit. The opening 112 may have a smooth or rough surface, depending on the manufacturing process and the desired friction of the fastener 10. The opening 112 may have a uniform or variable cross-section, depending on the shape and size of the fastener 10 and the nut retainer 110. The opening 112 may be adapted to different types and sizes of fasteners 10, depending on the application and the requirements of the nut retainer assembly 100.

Threaded Retainer Coupling Portion 113: The nut retainer 110 includes a threaded retainer coupling portion 113 is a feature of the nut retainer 110 that allows the nut retainer assembly 100 to be coupled with the swageable base 120. In the illustrated example, the threaded retainer coupling portion 113 has an internal thread that can be screwed into an external thread of the threaded base coupling portion 123 of the swageable base 120. Alternatively, the threaded retainer coupling portion 113 may have an external thread that can be screwed into an internal thread of the threaded base coupling portion 123 of the swageable base 120. The threaded retainer coupling portion 113 may have a diameter that is larger than the diameter of the swageable base 120, so that the fastener 10 can pass through the swageable base 120 and the nut retainer 110 without interference. The threaded retainer coupling portion 113 may have a length that is sufficient to provide a secure and stable connection with the swageable base 120. The threaded retainer coupling portion 113 may be adapted to different types and sizes of swageable bases 120, depending on the application and the requirements of the nut retainer assembly 100.

Anti-Rotation Surface 114: The interior cavity 111 of the nut retainer 110 may include an anti-rotation surface 114 to inhibit the fastener nut 150 from rotating inside the interior cavity 111. The anti-rotation surface 114 is a feature of the interior cavity 111 that inhibits the fastener nut 150 from turning when the fastener 10 is tightened or loosened. The anti-rotation surface 114 may have a shape that matches the shape of the fastener nut 150, such as a hexagon, a square, or any other polygon. Alternatively, the anti-rotation surface 114 may have a shape that differs from the shape of the fastener nut 150, but still provides enough contact points to resist rotation. For example, the anti-rotation surface 114 may have a circular shape with radial protrusions or indentations that engage with the corners or sides of the fastener nut 150. The anti-rotation surface 114 may be formed by molding, machining, stamping, or any other suitable process. The anti-rotation surface 114 may be integral with the nut retainer 110 or may be a separate component that is attached or inserted into the interior cavity 111. The anti-rotation surface 114 may be made of the same material as the nut retainer 110 or a different material that has sufficient strength and durability. The anti-rotation surface 114 may improve the performance and reliability of the nut retainer assembly 100 by ensuring that the fastener nut 150 stays in place and does not loosen or damage the threads of the fastener 10 or the nut retainer 110.

Cap Coupling Portion 115: The nut retainer 110 may include a cap coupling portion 115. The cap coupling portion 115 is a feature of the nut retainer 110 that allows the nut retainer assembly 100 to be coupled with a cap 160. In an example, the cap coupling portion 115 may be a threaded cap coupling portion. The threaded cap coupling portion generally has an external thread that can be screwed into an internal thread of the cap 160. Alternatively, the threaded cap coupling portion 115 could have an internal thread that can be screwed into an external thread of the cap 160. The threaded cap coupling portion 115 may have a length that is sufficient to provide a secure and stable connection with the cap 160. The threaded cap coupling portion 115 may be adapted to different types and sizes of caps 160, depending on the application and the requirements of the nut retainer assembly 100. Alternatively, the cap coupling portion 115 may include one or more non-threaded features that can be coupled with corresponding features on the cap 160. For example, the cap coupling portion 115 may have one or more snap-fit elements, such as hooks, tabs, pins, or sockets, which can engage with complementary snap-fit elements on the cap 160. Another example of a non-threaded feature is a friction fit, which involves inserting the cap coupling portion 115 into the cap 160 with sufficient force to create a tight fit. The friction fit may rely on the elasticity and friction of the materials of the cap coupling portion 115 and the cap 160 to prevent separation.

Swageable Base 120: The nut retainer assembly 100 includes a swageable base 120 for attachment to a structure. The swageable base 120 is a component that is used to mount the nut retainer 110 to a hole in the structure. The swageable base 120 generally includes a swageable section 121, a radial flange 122 extending outwardly from the swageable section 121, and a threaded base coupling portion 123 for engaging with the threaded retainer coupling portion 113 to couple the swageable base 120 with the nut retainer 110. The swageable base 120 may have various variations and alternatives depending on the application and requirements of the nut retainer assembly 100. For example, the swageable base 120 may have a different overall shape than the one illustrated herein.

The swageable base 120 may be made of any suitable material that can be swaged, such as metal, plastic, composite, or any combination thereof. The material of the swageable base 120 may have a hardness, ductility, elasticity, and density that are compatible with the structure to which the swageable base 120 is attached and the nut retainer 110. The material of the swageable base 120 may also have a corrosion resistance, thermal stability, and electrical conductivity that are appropriate for the application and environment of the nut retainer assembly 100. The swageable base 120 may be produced by casting, forging, extruding, machining, or any other suitable process that can produce the desired shape and size of the swageable base 120. The swageable base 120 may be subjected to heat treatment, surface treatment, coating, or any other process that can improve the properties and performance of the swageable base 120.

The swageable base 120 is preferably made of a metal material to provide high strength, durability, and resistance to corrosion and wear. For example, the metal material may be selected from one or more of titanium, tungsten carbide, tungsten, high-strength corrosion-resistant steel, and stainless steel. These metal materials may provide the swageable base 120 with suitable mechanical properties, such as hardness, ductility, elasticity, and density, to withstand the stresses and strains induced by the fastener 10 and the structure. The metal material may be chosen based on the compatibility with the material of the structure and the nut retainer 110, as well as the cost and availability of the metal material. The metal material may be processed by various methods, such as casting, forging, extruding, machining, heat treatment, surface treatment, coating, or any combination thereof, to achieve the desired shape, size, and performance of the swageable base 120.

Swageable Section 121: The swageable section 121 is a feature of the swageable base 120 that allows the swageable base 120 to be attached to a structure by deforming the material of the swageable section 121 within a hole in the structure. The swageable section 121 may have any suitable shape and size that can fit inside the hole in the structure and provide sufficient contact area and friction to hold the swageable base 120 in place. The swageable section 121 may be cylindrical, conical, tapered, or any other shape that can be swaged. The swageable section 121 may have a smooth or textured surface to enhance the grip and prevent slippage. The swageable section 121 may be swaged using a tool, such as a swaging die, a punch, a press, or any other device that can apply enough force and pressure to deform or compress the material of the swageable section 121. The swageable section 121 is typically swaged before coupling the swageable base 120 with the nut retainer 110. The swageable section 121 provides a simple and effective way of mounting the nut retainer assembly 100 to a structure without requiring welding or adhesive.

Radial Flange 122: The radial flange 122 is a feature of the swageable base 120 that extends outwardly from the swageable section 121. The radial flange 122 generally may have a circular shape and a diameter that is larger than the diameter of the swageable section 121. The radial flange 122 provides a transition between the swageable section 121 and the threaded base coupling portion 123, and it may provide an abutment surface 124 for abutting with the nut retainer 110. Further, the radial flange 122 helps to distribute the load and stress from the fastener 10 to the underlying structure. The radial flange 122 may also ensures a proper alignment and fit of the swageable base 120 with the nut retainer 110.

Threaded Base Coupling Portion 123: The threaded base coupling portion 123 is a feature of the swageable base 120 that allows the swageable base 120 to be coupled with the nut retainer 110. The threaded base coupling portion 123 of the first exemplary nut retainer assembly 100 generally has an external thread that can be screwed into an internal thread of the nut retainer 110. Alternatively, the threaded base coupling portion 123 could have an internal thread that can be screwed into an external thread of the nut retainer 110. The threaded base coupling portion 123 may have a length that is sufficient to provide a secure and stable connection with the nut retainer 110. The threaded base coupling portion 123 may be adapted to different types and sizes of nut retainers 110, depending on the application and the requirements of the swageable base 120. The threaded base coupling portion 123 provides a simple and effective way of joining the swageable base 120 and the nut retainer 110.

Fastener Nut 150: The nut retainer assembly 100 may include a fastener nut 150. The fastener nut 150 is a component that can be used to secure a fastener 10. The fastener nut 150 may have a hexagonal shape or any other suitable shape that can fit inside the interior cavity 111 of the nut retainer 110. The fastener nut 150 may have an internally threaded bore 151 for engaging with an externally threaded shank portion 12 of the fastener 10. The fastener nut 150 may be made of metal, plastic, or any other suitable material that can withstand the loads and stresses applied by the fastener 10 and the structure.

Cap 160: The nut retainer assembly 100 may include a cap 160 for engagement with the cap coupling portion 115. The cap 160 is a component that can be used to cover the nut retainer 110, the swageable base 120 and the fastener nut 150. The cap 160 may have any suitable shape that can fit over the nut retainer 110, the swageable base 120 and the fastener nut 150. The cap 160 may have, for example, an internally threaded bore 161 for engaging with the externally threaded cap coupling portion 115 of the nut retainer 110. The cap 160 may be made of metal, plastic, or any other suitable material that can provide protection for the fastener nut 150 and the head portion 11 of the fastener 10. In a preferred aspect the cap 160 is comprised of a nonconductive material, such as nonconductive transparent polymer material, to prevent or reduce electromagnetic effects from passing through the nut retainer assembly 100. The cap 160 may also prevent or reduce corrosion, abrasion, or damage to the fastener nut 150 and the head portion 11 of the fastener 10 caused by environmental factors or mechanical forces. The cap 160 may also improve the performance and reliability of the nut retainer assembly 100 by providing additional security and stability for the fastener nut 150.

Blind Fastening System 1: Referring to Fig. 4, the nut retainer assembly 100 may be used to attach a fastener 10 to a structure comprising a first substrate 20 and a second substrate 30. The fastener 10 may comprise a head portion 11 and a threaded shank portion 12. The head portion 11 may have any suitable shape, such as a hexagonal, round, or countersunk shape. The shank portion 12 may be threaded, and may have any suitable type of thread, such as a coarse, fine, or metric thread. The fastener 10 may be made of metal, plastic, or any other suitable material that can provide sufficient strength and durability for the intended application.

The first substrate 20 may comprise a first through hole 21 sized to provide a first clearance fit for the fastener 10. A clearance fit is a fit that allows some free movement between the mating parts. The first through hole 21 may define a first clamping surface 22. The first clamping surface 22 may be perpendicular, parallel, or angled to the longitudinal axis of the fastener 10. The first substrate 20 may also define a first working surface 23 to receive the fastener 10. The first working surface 23 may be opposite to the first clamping surface 22. The first substrate 20 may be made of metal, plastic, or any other suitable material that can withstand the loads and stresses applied by the fastener 10 and the nut retainer assembly 100. The first substrate 20 may have any suitable thickness, shape, and size for the intended application.

The second substrate 30 may comprise a second through hole 31 sized to provide a second clearance fit for the fastener 10. The second through hole 31 may define a second clamping surface 32 facing the first clamping surface 22. The second clamping surface 32 may be perpendicular, parallel, or angled to the longitudinal axis of the fastener 10. The second substrate 30 may also define a second working surface 33 to receive the fastener 10. The second working surface 33 may be opposite to the second clamping surface 32. The second substrate 30 may be made of metal, plastic, or any other suitable material that can withstand the loads and stresses applied by the fastener 10 and the nut retainer assembly 100. The second substrate 30 may have any suitable thickness, shape, and size for the intended application.

The nut retainer assembly 100 may comprise a fastener nut 150 (Figs. 1-3) for placement on the first clamping surface 22 of the first substrate 20 over the first through hole 21. The fastener nut 150 may comprise a threaded bore 151 (Figs. 1-3) for engaging with the shank portion 12 of the fastener 10. The fastener nut 150 may have any suitable shape, such as a hexagonal, round, or square shape. The fastener nut 150 may have any suitable type of thread that matches the type of thread of the> fastener 10, such as a coarse, fine, or metric thread. The fastener nut 150 may be made of metal, plastic, or any other suitable material that can provide sufficient strength and durability for the intended application.

As best shown in Figs. 1-3, the nut retainer assembly 100 may include nut retainer 110, a swageable base 120, and a cap 160, as described above. The nut retainer assembly 100 may be used to attach the fastener 10 to the structure in the following manner. First, the swageable base 120 may be deformed by applying a radial force, such that the swageable section 121 expands and locks onto the first substrate 20 around the first through hole 21, thereby securing the nut retainer assembly 100 to the first substrate 20. Then, the nut retainer 110 may be coupled with the swageable base 120 while the fastener nut 150 is positioned within the nut retainer 110. Next, the first substrate 20 may be positioned in a configuration with respect to the second substrate 30 such that the first through hole 21 of the first substrate 20 and the second through hole 31 of the second substrate 30 are aligned. The nut retainer assembly 100 may be positioned with respect to other components such that the nut retainer assembly 100 is not easily accessed. The fastener 10 may be inserted through the second through hole 31 of the second substrate 30, such that the head portion 11 rests on the second clamping surface 32, and the fastener 10 may extend through the first through hole 21 of the first substrate 20, such that the threaded shank portion 12 protrudes from the first clamping surface 22, and such that the threaded bore 151 aligns with the threaded shank portion 12 of the fastener 10. Then, the fastener nut 150 may be engaged with the threaded shank portion 12 of the fastener 10 by rotating the fastener nut 150 in a clockwise direction, until a desired torque is reached. Once the sufficient force is achieved, the fastener nut 50 takes the compressive load until the fastener 10 reaches final torque. Finally, the cap 160 may be engaged with the cap coupling portion 115 of the nut retainer 110 such as by rotating the cap 160, until a desired torque is reached, thereby securing the cap 160 to the nut retainer 110 and covering the fastener nut 150 and the head portion 11 of the fastener 10 to provide protection, such as protection from electromagnetic effects. By using the nut retainer assembly 100 as described, the fastener 10 can be securely attached to the structure comprising the first substrate 20 and the second substrate 30, without requiring access to the second working surface 33 of the second substrate 30. This makes the nut retainer assembly 100 suitable for applications where the second working surface 33 of the second substrate 30 is inaccessible or difficult to access, such as when the second substrate 30 is a blind or enclosed member. The nut retainer assembly 100 also provides several advantages over conventional methods of attaching fasteners to structures, such as improved strength, durability, reliability, simplicity, and versatility.

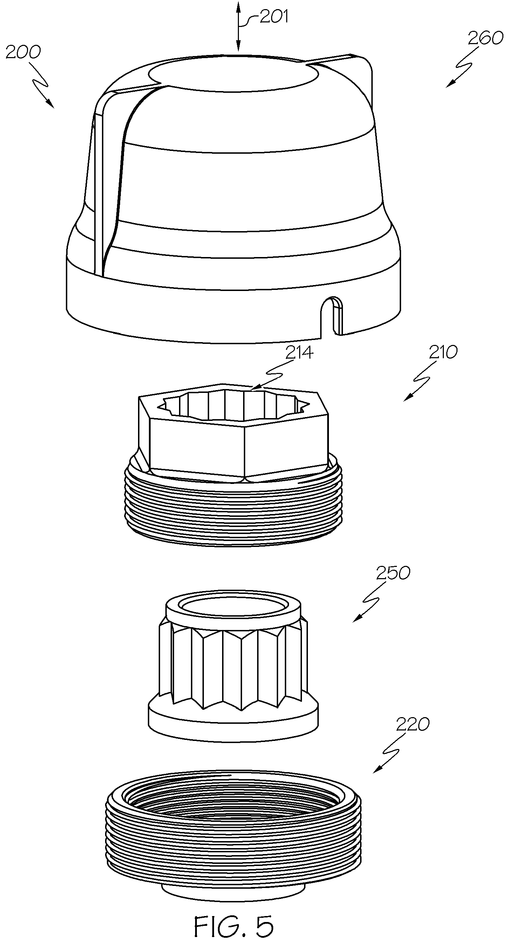

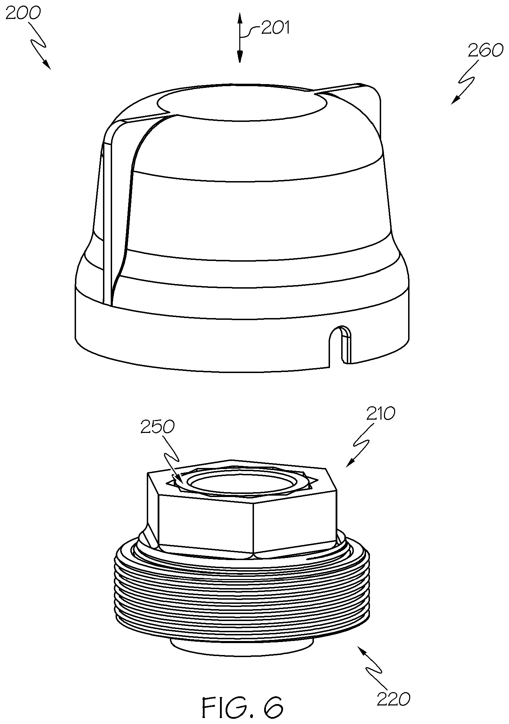

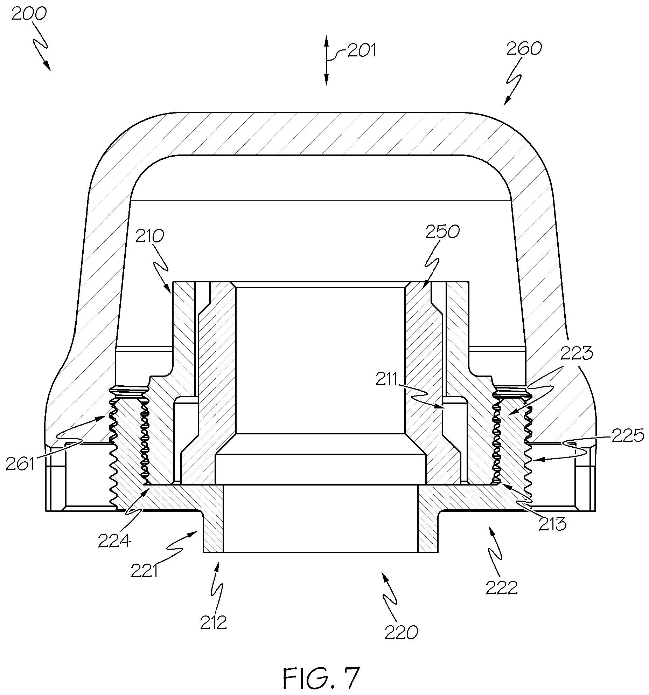

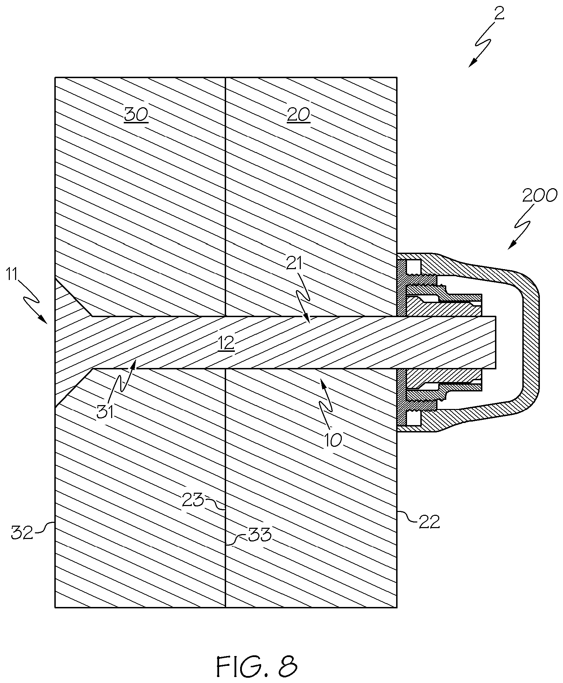

Nut Retainer Assembly 200: Figs. 5-8 of the present description provide a second example of a nut retainer assembly that can be used to attach a fastener to a structure. Figs. 5-8 show different views of this nut retainer assembly. Fig. 5 illustrates an exploded perspective view of the nut retainer assembly. Fig. 6 illustrates a perspective view showing how the nut retainer assembly looks when it is assembled. Fig. 7 shows a cross-sectional view of the nut retainer assembly. Fig. 8 shows a cross-sectional view of the nut retainer assembly when it is used to secure a blind fastener to a structure.

Referring to Figs. 5-8, the second example illustrates a variation of the nut retainer assembly 200 that can be used to attach a fastener to a structure with a different threading configuration. The second exemplary nut retainer assembly 200 includes the same components as the first example, namely the nut retainer 210, the swageable base 220, the fastener nut 250, and the cap 260. However, in the second example, the threading between the nut retainer 210 and the swageable base 220 are reversed, such that the nut retainer 210 has external threads and the swageable base 220 has internal threads. This allows the nut retainer 210 to be coupled with the swageable base 220 by screwing the nut retainer 210 into the swageable base 220, instead of sliding the nut retainer 110 over the swageable base 120 as in the first example.

Nut Retainer 210: The nut retainer 210 is similar to the nut retainer 110 described in the first example, except that it has external threads instead of internal threads. The nut retainer 210 serves as a housing for the fastener nut 250 and a coupling element for the swageable base 220. The nut retainer 210 has several features that enable its function, such as interior cavity 211, an opening 212, and a threaded retainer coupling portion 213, and an anti-rotation surface 214. The nut retainer 210 has an interior cavity 211 that receives the fastener nut 250 within the interior cavity 211. The nut retainer 210 also has an opening 212 at one end of the interior cavity 211 through which the fastener shank portion can extend. The nut retainer 210 further has a threaded retainer coupling portion 213 at the open end of the interior cavity 211, which includes exterior threading in this example. The threaded retainer coupling portion 213 mates with corresponding internal threads of the swageable base 220 to form a secure connection between the nut retainer 210 and the swageable base 220. The nut retainer 210 additionally has an anti-rotation surface 214 on its outer surface, which prevents the nut retainer 210 from rotating relative to the structure when the fastener is tightened.

Swageable Base 220: The swageable base 220 is similar to the swageable base 120 described in the first example, except that it has internal threads instead of external threads. The swageable base 220 serves as a support element for the nut retainer 210 and a coupling element for the structure. The swageable base 220 has several features that enable its function, such as a swageable section 221, a radial flange 222, and a threaded base coupling portion 223. The swageable base 220 has a swageable section 221 that is inserted into an opening in the structure and swaged to form a tight fit with the structure. The swageable base 220 also has a radial flange 222 that extends outwardly from the swageable section 221 and contacts the surface of the structure. The radial flange 222 provides stability and rigidity to the swageable base 220. The swageable base 220 further has a threaded base coupling portion 223 at the end opposite to the radial flange 222, which includes interior threading in this example. The threaded base coupling portion 223 mates with corresponding exterior threads of the nut retainer 210 to form a secure connection between the swageable base 220 and the nut retainer 210. The radial flange 222 may also has an abutment surface 224 that faces away from the structure and serves as a stop for the nut retainer 210 when the nut retainer 210 is screwed onto the swageable base 220.

Cap Coupling Portion 225: The cap coupling portion 225 of the second example is similar to the cap coupling portion 115 described in the first example, except that the cap coupling portion 225 is positioned on an exterior of the swageable base 220, whereas the cap coupling portion 115 is positioned on an exterior of the nut retainer 110. The cap coupling portion 225 is a portion of the swageable base 220 on a radially exterior surface of the swageable base 220. The cap coupling portion 225 is a feature of the swageable base 220 that allows the swageable base 220 to be coupled with a cap 260. In an example, the cap coupling portion 225 may be a threaded cap coupling portion. The threaded cap coupling portion generally has an external thread that can be screwed into an internal thread of the cap 260. Alternatively, the threaded cap coupling portion 225 could have an internal thread that can be screwed into an external thread of the cap 260. The threaded cap coupling portion 225 may have a length that is sufficient to provide a secure and stable connection with the cap 260. The threaded cap coupling portion 225 may be adapted to different types and sizes of caps 260, depending on the application and the requirements of the nut retainer assembly 200. Alternatively, the cap coupling portion 225 may include one or more non-threaded features that can be coupled with corresponding features on the cap 260. For example, the cap coupling portion 225 may have one or more snap-fit elements, such as hooks, tabs, pins, or sockets, which can engage with complementary snap-fit elements on the cap 260. Another example of a non-threaded feature is a friction fit, which involves inserting the cap coupling portion 225 into the cap 260 with sufficient force to create a tight fit. The friction fit may rely on the elasticity and friction of the materials of the cap coupling portion 225 and the cap 260 to prevent separation.

Blind Fastening System 2: The blind fastening system 2 is similar to the blind fastening system 1 (Fig. 4) described above, except that it includes the nut retainer assembly 200 instead of the nut retainer assembly 100. The blind fastening system 2 includes a fastener 10, a first substrate 20, a second substrate 30, and the nut retainer assembly 200. The fastener 10 has a shank portion 12 and a head portion 11. The shank portion 12 extends through a first through hole 21 in the first substrate 20 and a second through hole 31 in the second substrate 30. The head portion 11 has a larger diameter than the shank portion 12 and abuts against a first clamping surface 22 of the first substrate 20.

The first substrate 20 has a first through hole 21, a first clamping surface 22, and a first working surface 23. The first through hole 21 allows the shank portion 12 of the fastener 10 to pass through the first substrate 20. The first clamping surface 22 faces the nut retainer assembly 200 and contacts the nut retainer assembly 200 when the fastener 10 is tightened. The first working surface 23 faces away from the first clamping surface 22 and is opposite to the nut retainer assembly 200.

The second substrate 30 has a second through hole 31, a second clamping surface 32, and a second working surface 33. The second through hole 31 allows the shank portion 12 of the fastener 10 to pass through the second substrate 30. The second clamping surface 32 faces the head portion 11 of the fastener 10 and contacts the head portion 11 when the fastener 10 is tightened. The second working surface 33 faces away from the second clamping surface 32 and is opposite to the head portion 11 of the fastener 10.

As best shown in Figs. 5-7, the nut retainer assembly 200 has a swageable base 220, a nut retainer 210, and a nut 240. The swageable base 220 is inserted into an opening in the first substrate 20 (Fig. 8) and swaged to form a tight fit with the first substrate 20. The swageable base 220 has a swageable section 221, a radial flange 222, a threaded base coupling portion 223, and a cap coupling portion 225. The swageable section 221 is swaged to the first substrate 20. The radial flange 222 extends outwardly from the swageable section 221 and contacts the first clamping surface 22 of the first substrate 20. The threaded base coupling portion 223 has interior threads that mate with exterior threads of the nut retainer 210. The cap coupling portion 225 has exterior threads that mate with interior threads of a cap 260.

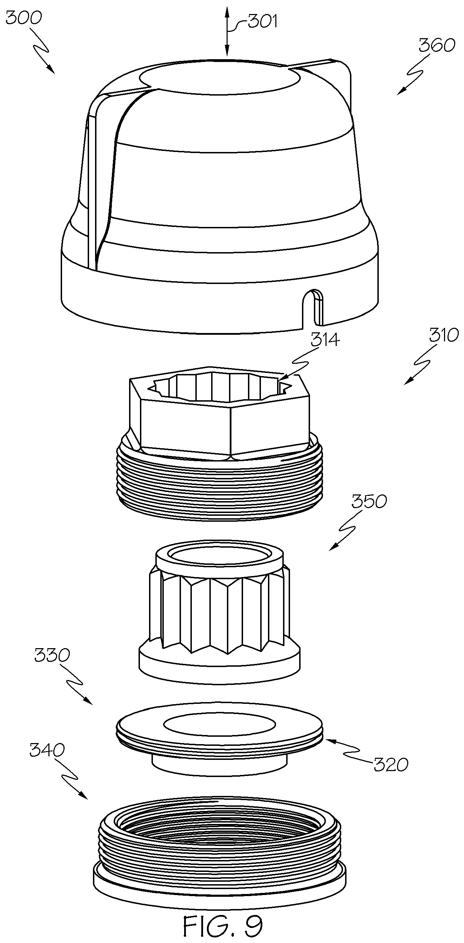

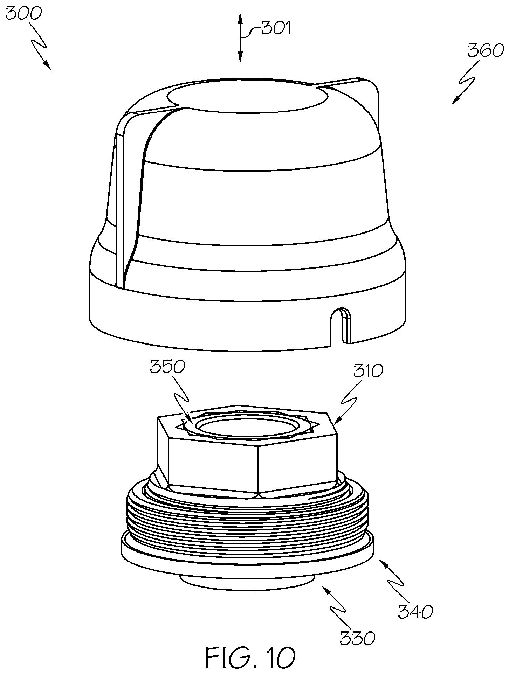

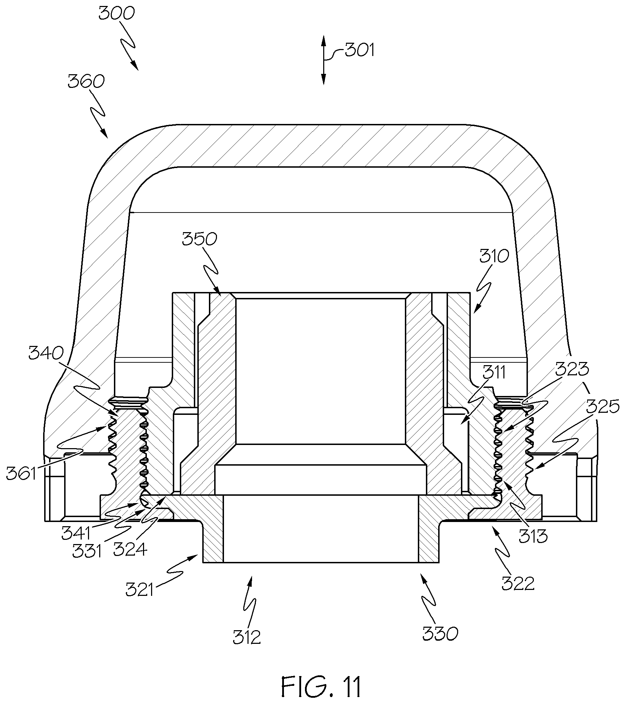

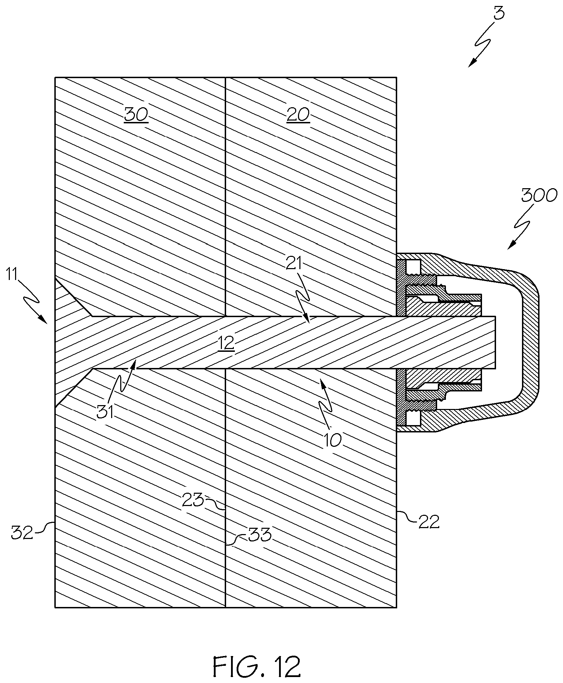

Nut Retainer Assembly 300: Figs. 9-12 of the present description provide a third example of a nut retainer assembly that can be used to attach a fastener to a structure. Figs. 9-12 show different views of this nut retainer assembly. Fig. 9 illustrates an exploded perspective view of the nut retainer assembly. Fig. 10 illustrates a perspective view showing how the nut retainer assembly looks when it is assembled. Fig. 11 shows a cross-sectional view of the nut retainer assembly. Fig. 12 shows a cross-sectional view of the nut retainer assembly when it is used to secure a blind fastener to a structure.

The nut retainer assembly 300 is similar to the nut retainer assembly 200, except that instead of having a single swageable base 220, it has a swageable base assembly 320 that comprises a first base component 330 comprising the swageable section 321 and the radial flange 322, and a second base component 340 comprising the threaded base coupling portion 323, wherein the first base component 330 includes a first threaded component coupling portion 331 for coupling to a second threaded component coupling portion 341 of the second base component 340. The advantage of this configuration is that the first base component 330 can be inserted into an opening in the second substrate 30 and swaged before the second base component 340 is attached to it, thereby facilitating the swaging process by avoiding the initial presence of the second base component 340. The second base component 340 can then be screwed onto the first base component 330. The nut retainer assembly 300 also includes a nut retainer 310, a fastener nut 350, and a cap 360, which are similar to those of the nut retainer assembly 200. The nut retainer 310 has exterior threads that mate with the interior threads of the second base component 340, and interior threads that couple with the threads of the fastener nut 350. The cap 360 has interior threads that couple with the exterior threads of the second base component 340. The nut retainer assembly 300 can be used to attach a blind fastener to a structure in a similar manner as the nut retainer assembly 200, as shown in Fig. 12.

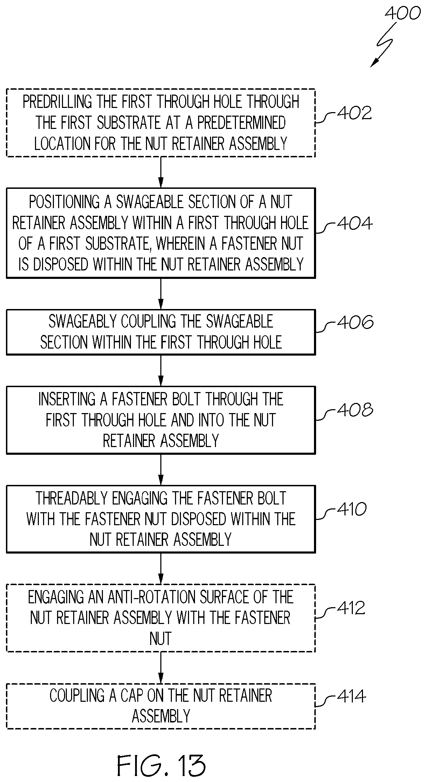

Method of Installing a Nut Retainer Assembly in a Blind Fastening System 400: Referring to Fig. 13, the present description provides a method 400 for installing a nut retainer assembly in a blind fastening system, designed to simplify the process of fastening components in areas with limited access. This method ensures a reliable and durable connection, utilizing the unique features of the nut retainer assembly described in previous claims.

Predrilling the First Through Hole 402: If necessary, a first through hole may be predrilled through the first substrate at a predetermined location for the nut retainer assembly. This step ensures that the first substrate has a suitable opening to receive the swageable section and that the nut retainer assembly can be aligned with the second substrate. The diameter of the first through hole should be slightly larger than the diameter of the swageable section to allow for its insertion and expansion. The predrilling can be done using conventional drilling techniques or methods. Alternatively, the first substrate can be pre-formed with the first through hole.

Positioning 404 the Swageable Section: The method includes positioning the swageable section 121, 221, 321 of the nut retainer assembly 100, 200, 300 within the first through hole 21 of a first substrate 20. The positioning ensures that the swageable section aligns accurately with the through hole to facilitate the subsequent swaging process. The nut retainer assembly contains a fastener nut 150, 250, 350 pre-positioned within its internal cavity.

Swageably Coupling 406 the Swageable Section: Once the swageable section is aligned and positioned, it is swageably coupled within the first through hole. This involves deforming the swageable section using appropriate tools or methods to expand and tightly fit within the structure of the first substrate, thereby securing the assembly in place without the need for rear access.

Inserting 408 the Fastener: Following the secure placement of the swageable base, a fastener 10 is inserted through the second through hole 31 of a second substrate 30, and into the nut retainer assembly via the opening 112, 212, 312. This step involves aligning the fastener with the internal threads of the fastener nut housed within the nut retainer assembly.

Threadably Engaging 410 the Fastener: The fastener is then threadably engaged with the fastener nut. This is performed by rotating the fastener, which engages the threads of the fastener nut, securing the two substrates together with the nut retainer assembly clamped between them. The engagement should be executed to a specific torque to ensure the connection is both tight and secure.

Engaging 412 the Anti-Rotation Surface: This step involves engaging the anti-rotation surface 114, 214, 314 of the nut retainer assembly with the fastener nut. The anti-rotation surface inhibits the nut from rotating during the tightening process, thereby maintaining the integrity of the connection during and after installation.

Coupling 414 the Cap: This step involves coupling a cap 160, 260, 360 on the nut retainer assembly. The cap, preferably made of a nonconductive or transparent polymer material, is screwed onto the external threading of the cap coupling portion 115, 225, 325. This cap not only protects the assembly from environmental factors but also helps to insulate the assembly from electrical and thermal influences.

This method facilitates the secure and efficient installation of fasteners in applications where access is limited, leveraging the unique design of the nut retainer assembly to enhance reliability and ease of use.

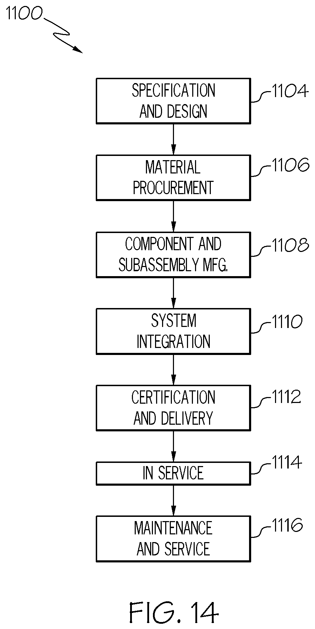

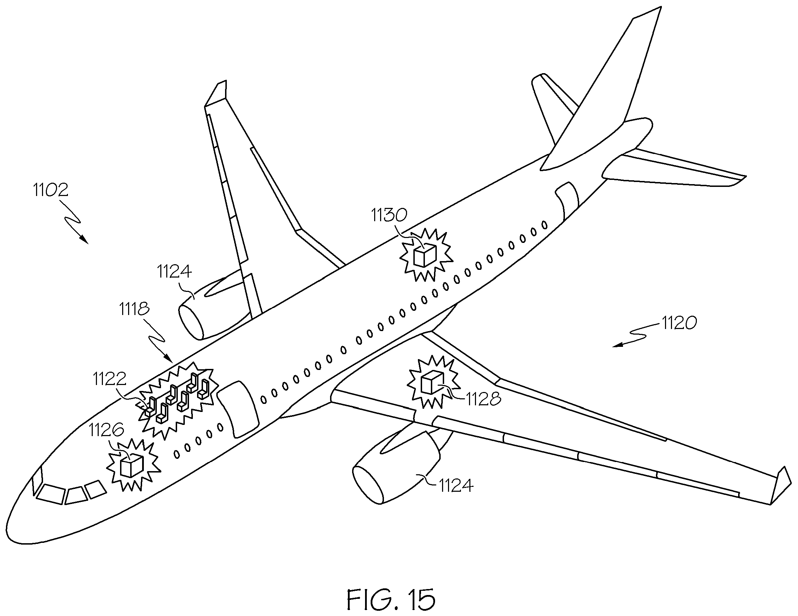

Examples of the subject matter disclosed herein may be described in the context of aircraft manufacturing and service method 1100 as shown in Fig. 14 and aircraft 1102 as shown in Fig. 15. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 15, aircraft 1102 produced by illustrative method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Apparatus(es) and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114). Also, one or more examples of the apparatus(es), method(s), or combination thereof may be utilized during production stages (block 1108 and block 1110), for example, by substantially expediting assembly of or reducing the cost of aircraft 1102. Similarly, one or more examples of the apparatus or method realizations, or a combination thereof, may be utilized, for example and without limitation, while aircraft 1102 is in service (block 1114) and/or during maintenance and service (block 1116).

## Claims

1. A nut retainer assembly (100, 200, 300) for a blind fastener system, comprising:
a nut retainer (110, 210, 310) aligned along a longitudinal axis (101, 201, 301), the nut retainer comprising: i) an interior cavity (111, 211, 311) for securely holding a fastener nut (150, 250, 350) therein; ii) an opening (112, 212, 312) for receiving a fastener (10) therethrough; and iii) a threaded retainer coupling portion (113, 213, 313); and
a swageable base (120, 220) or swageable base assembly (320), the swageable base or swageable base assembly being aligned along the longitudinal axis (101, 201, 301), the swageable base or swageable base assembly comprising: i) a swageable section (121, 221, 321); ii) a radial flange (122, 222, 322) extending outwardly from the swageable section; and iii) a threaded base coupling portion (123, 223, 323) for engaging with the threaded retainer coupling portion (113, 213, 313).

2. The nut retainer assembly of Claim 1 wherein the nut retainer comprises a metal material, in particular at least one of titanium, tungsten carbide, tungsten, high-strength corrosion-resistant steel and stainless steel.

3. The nut retainer assembly of Claim 1 or 2 wherein the interior cavity of the nut retainer comprises an anti-rotation surface (114, 214, 314).

4. The nut retainer assembly of Claim 3 further comprising the fastener nut (150, 250, 350) positioned in the interior cavity (111, 211, 311) and in engagement with the anti-rotation surface (114, 214, 314).

5. The nut retainer assembly of any one of the preceding Claims wherein the nut retainer comprises a threaded cap coupling portion (115).

6. The nut retainer assembly of Claim 5 further comprising a cap (160) in threaded engagement with the threaded cap coupling portion (115).

7. The nut retainer assembly of Claim 6 wherein the cap is comprised of a nonconductive material, in particular a nonconductive transparent polymer material.

8. The nut retainer assembly of any of the preceding Claims wherein the swageable base or swageable base assembly is a swageable base assembly (320) comprising: i) a first base component (330) comprising the swageable section (321) and the radial flange (322); and ii) a second base component (340) comprising the threaded base coupling portion (323), wherein the first base component (330) includes a first threaded component coupling portion (331) for coupling to a second threaded component coupling portion (341) of the second base component (340).

9. The nut retainer assembly of any one of the preceding Claims wherein the swageable base comprises a threaded cap coupling portion (225, 325), wherein, optionally, the nut retainer assembly further comprises a cap (260, 360) in threaded engagement with the threaded cap coupling portion (225, 325).

10. A blind fastening system (1), comprising:
a fastener (10) comprising a head portion (11) and a threaded shank portion (12);
a first substrate (20) comprising a first through hole (21) sized to provide a first clearance fit for the fastener and defining a first clamping surface (22) to receive the fastener, the first substrate (20) defining a first working surface (23);
a second substrate (30) comprising a second through hole (31) sized to provide a second clearance fit for the fastener and defining a second clamping surface (32) facing the first clamping surface, the second substrate further defining a second working surface (33) to receive the fastener (10);
a fastener nut (150, 250, 350) for placement on the first working surface of the first substrate over the first through bore, the fastener nut comprising a threaded bore (151, 152, 153); and
a nut retainer assembly (100, 200, 300) according to any one of claims 1 to 9, shaped to retain the fastener nut on the first working surface of the first substrate, the nut retainer assembly comprising a swageable section (121, 221, 321) for swageably coupling within the first through hole of the first substrate,
wherein, with the fastener nut disposed within the nut retainer assembly, the first through hole of the first substrate, the second through hole of the second substrate, and the threaded bore of the fastener nut provide for insertion of the fastener and threaded engagement of the threaded shank portion of the fastener with the threaded bore of the fastener nut.

11. The blind fastening system of Claim 10 further comprising an anti-rotation surface (114, 214, 314) of the nut retainer assembly (100, 200, 300) in engagement with the fastener nut (150, 250, 350).

12. The blind fastening system of Claim 10 or 11 further comprising a cap (160, 260, 360) in threaded engagement with the nut retainer assembly (100, 200, 300).

13. The blind fastening system of Claim 12 wherein the cap is comprised of a nonconductive material, in particular a nonconductive transparent polymer material.

14. A fastening method (400), comprising:
positioning (404) a swageable section (121, 221, 321) of a nut retainer assembly (100, 200, 300) according to any one of claims 1 to 9 within a first through hole (21) of a first substrate (20), wherein a fastener nut (150, 250, 350) is disposed within the nut retainer assembly;
swageably coupling (406) the swageable section within the first through hole;
inserting (408) a fastener (10) through the first through hole and into the nut retainer assembly; and
threadably engaging (410) the fastener with the fastener nut disposed within the nut retainer assembly.

15. The fastening method of Claim 14 further comprising:
predrilling (402) the first through hole through the first substrate at a predetermined location for the nut retainer assembly, and/or
engaging (412) an anti-rotation surface (114, 214, 314) of the nut retainer assembly (100, 200, 300) with the fastener nut (150, 250, 350), and/or
coupling (414) a cap (160, 260, 360) on the nut retainer assembly (100, 200, 300).

## Patentansprüche

1. Mutterhalteranordnung (100, 200, 300) für ein Blindbefestigungssystem, umfassend:
einen Mutterhalter (110, 210, 310), der entlang einer Längsachse (101, 201, 301) ausgerichtet ist, wobei der Mutterhalter umfasst: i) einen Innenhohlraum (111, 211, 311) zum sicheren Halten einer Befestigungsmutter (150, 250, 350) darin; ii) eine Öffnung (112, 212, 312) zum Aufnehmen eines Befestigungselements (10) hindurch; und iii) einen Gewinde-Mutterhalter-Kupplungsabschnitt (113, 213, 313); und
einen verstemmbaren Grundkörper (120, 220) oder eine verstemmbare Grundkörperanordnung (320), wobei der verstemmbare Grundkörper oder die verstemmbare Grundkörperanordnung entlang der Längsachse (101, 201, 301) ausgerichtet ist, wobei der verstemmbare Grundkörper oder die verstemmbare Grundkörperanordnung umfasst: i) einen verstemmbaren Abschnitt (121, 221, 321); ii) einen radialen Flansch (122, 222, 322), der sich nach außen von dem verstemmbaren Abschnitt erstreckt; und iii) einen Gewinde-Grundkörper-Kupplungsabschnitt (123, 223, 323) zum Eingreifen mit dem Gewinde-Mutterhalter-Kupplungsabschnitt (113, 213, 313).

2. Mutterhalteranordnung nach Anspruch 1, wobei der Mutterhalter ein metallisches Material umfasst, insbesondere mindestens eines von Titan, Wolframcarbid, Wolfram, hochfestem korrosionsbeständigem Stahl und Edelstahl.

3. Mutterhalteranordnung nach Anspruch 1 oder 2, wobei der Innenhohlraum des Mutterhalters eine Verdrehschutzfläche (114, 214, 314) umfasst.

4. Mutterhalteranordnung nach Anspruch 3, weiter umfassend die Befestigungsmutter (150, 250, 350), die in dem Innenhohlraum (111, 211, 311) positioniert ist und mit der Verdrehschutzfläche (114, 214, 314) in Eingriff ist.

5. Mutterhalteranordnung nach einem der vorstehenden Ansprüche, wobei der Mutterhalter einen Gewinde-Kappen-Kupplungsabschnitt (115) umfasst.

6. Mutterhalteranordnung nach Anspruch 5, weiter umfassend eine Kappe (160) in Gewindeeingriff mit dem Gewinde-Kappen-Kupplungsabschnitt (115).

7. Mutterhalteranordnung nach Anspruch 6, wobei die Kappe aus einem nichtleitenden Material besteht, insbesondere einem nichtleitenden transparenten Polymermaterial.

8. Mutterhalteranordnung nach einem der vorstehenden Ansprüche, wobei der verstemmbare Grundkörper oder die verstemmbare Grundkörperanordnung eine verstemmbare Grundkörperanordnung (320) ist, umfassend: i) eine erste Grundkörperkomponente (330), die den verstemmbaren Abschnitt (321) und den radialen Flansch (322) umfasst; und ii) eine zweite Grundkörperkomponente (340), die den Gewinde-Grundkörper-Kupplungsabschnitt (323) umfasst, wobei die erste Grundkörperkomponente (330) einen ersten Gewinde-Komponenten-Kupplungsabschnitt (331) zum Koppeln an einen zweiten Gewinde-Komponenten-Kupplungsabschnitt (341) der zweiten Grundkörperkomponente (340) einschließt.

9. Mutterhalteranordnung nach einem der vorstehenden Ansprüche, wobei der verstemm-bare Grundkörper einen Gewinde-Kappen-Kupplungsabschnitt (225, 325) umfasst, wobei die Mutterhalteranordnung wahlweise weiter eine Kappe (260, 360) in Gewindeeingriff mit dem Gewinde-Kappen-Kupplungsabschnitt (225, 325) umfasst.

10. Blindbefestigungssystem (1), umfassend:
ein Befestigungselement (10), das einen Kopfabschnitt (11) und einen Gewindeschaftabschnitt (12) umfasst;
ein erstes Substrat (20), das ein erstes Durchgangsloch (21) umfasst, das bemessen ist, um eine erste Spielpassung für das Befestigungselement bereitzustellen, und das eine erste Klemmfläche (22) definiert, um das Befestigungselement aufzunehmen, wobei das erste Substrat (20) eine erste Arbeitsfläche (23) definiert;
ein zweites Substrat (30), das ein zweites Durchgangsloch (31) umfasst, das bemessen ist, um eine zweite Spielpassung für das Befestigungselement bereitzustellen, und das eine zweite Klemmfläche (32) definiert, die der ersten Klemmfläche zugewandt ist, wobei das zweite Substrat weiter eine zweite Arbeitsfläche (33) definiert, um das Befestigungselement (10) aufzunehmen;
eine Befestigungsmutter (150, 250, 350) zum Anordnen auf der ersten Arbeitsfläche des ersten Substrats über der ersten Durchgangsbohrung, wobei die Befestigungsmutter eine Gewindebohrung (151, 152, 153) umfasst; und
eine Mutterhalteranordnung (100, 200, 300) nach einem der Ansprüche 1 bis 9, die geformt ist, um die Befestigungsmutter auf der ersten Arbeitsfläche des ersten Substrats zu halten, wobei die Mutterhalteranordnung einen verstemmbaren Abschnitt (121, 221, 321) zum Koppeln durch Verstemmen innerhalb des ersten Durchgangslochs des ersten Substrats umfasst,
wobei, mit der Befestigungsmutter innerhalb der Mutterhalteranordnung angeordnet, das erste Durchgangsloch des ersten Substrats, das zweite Durchgangsloch des zweiten Substrats und die Gewindebohrung der Befestigungsmutter das Einführen des Befestigungselements und den Gewindeeingriff des Gewindeschaftabschnitts des Befestigungselements mit der Gewindebohrung der Befestigungsmutter ermöglichen.

11. Blindbefestigungssystem nach Anspruch 10, weiter umfassend eine Verdrehschutzfläche (114, 214, 314) der Mutterhalteranordnung (100, 200, 300), die mit der Befestigungsmutter (150, 250, 350) in Eingriff ist.

12. Blindbefestigungssystem nach Anspruch 10 oder 11, weiter umfassend eine Kappe (160, 260, 360) in Gewindeeingriff mit der Mutterhalteranordnung (100, 200, 300).

13. Blindbefestigungssystem nach Anspruch 12, wobei die Kappe aus einem nichtleitenden Material besteht, insbesondere einem nichtleitenden transparenten Polymermaterial.

14. Befestigungsverfahren (400), umfassend:
Positionieren (404) eines verstemmbaren Abschnitts (121, 221, 321) einer Mutterhalteranordnung (100, 200, 300) nach einem der Ansprüche 1 bis 9 innerhalb eines ersten Durchgangslochs (21) eines ersten Substrats (20), wobei eine Befestigungsmutter (150, 250, 350) innerhalb der Mutterhalteranordnung angeordnet ist;
Koppeln durch Verstemmen (406) des verstemmbaren Abschnitts innerhalb des ersten Durchgangslochs;
Einführen (408) eines Befestigungselements (10) durch das erste Durchgangsloch und in die Mutterhalteranordnung; und
In Gewindeeingriff bringen (410) des Befestigungselements mit der Befestigungsmutter, die innerhalb der Mutterhalteranordnung angeordnet ist.

15. Befestigungsverfahren nach Anspruch 14, weiter umfassend:
Vorbohren (402) des ersten Durchgangslochs durch das erste Substrat an einer vorbestimmten Stelle für die Mutterhalteranordnung, und/oder
In Eingriff bringen (412) einer Verdrehschutzfläche (114, 214, 314) der Mutterhalteranordnung (100, 200, 300) mit der Befestigungsmutter (150, 250, 350), und/oder
Koppeln (414) einer Kappe (160, 260, 360) an der Mutterhalteranordnung (100, 200, 300).

## Revendications

1. Ensemble de retenue d'écrou (100, 200, 300) pour un système de fixation aveugle, comprenant :
un élément de retenue d'écrou (110, 210, 310) aligné le long d'un axe longitudinal (101, 201, 301), l'élément de retenue d'écrou comprenant : i) une cavité intérieure (111, 211, 311) destinée à maintenir solidement un écrou de fixation (150, 250, 350) en son sein ; ii) une ouverture (112, 212, 312) destinée à recevoir un élément de fixation (10) à travers celle-ci ; et iii) une partie filetée d'accouplement de l'élément de retenue d'écrou (113, 213, 313) ; et
une base déformable par matage (120, 220) ou un ensemble base déformable par matage (320), la base déformable par matage ou l'ensemble base déformable par matage étant aligné le long de l'axe longitudinal (101, 201, 301), la base déformable par matage ou l'ensemble base déformable par matage comprenant : i) une section déformable par matage (121, 221, 321) ; ii) une collerette radiale (122, 222, 322) s'étendant vers l'extérieur depuis la section déformable par matage ; et iii) une partie filetée d'accouplement de la base (123, 223, 323) destinée à venir en prise avec la partie filetée d'accouplement de l'élément de retenue d'écrou (113, 213, 313).

2. Ensemble de retenue d'écrou selon la revendication 1, dans lequel l'élément de retenue d'écrou comprend un matériau métallique, en particulier au moins l'un parmi le titane, le carbure de tungstène, le tungstène, l'acier haute résistance résistant à la corrosion et l'acier inoxydable.

3. Ensemble de retenue d'écrou selon la revendication 1 ou la revendication 2, dans lequel la cavité intérieure de l'élément de retenue d'écrou comprend une surface anti-rotation (114, 214, 314).

4. Ensemble de retenue d'écrou selon la revendication 3, comprenant en outre l'écrou de fixation (150, 250, 350) positionné dans la cavité intérieure (111, 211, 311) et en prise avec la surface anti-rotation (114, 214, 314).

5. Ensemble de retenue d'écrou selon l'une quelconque des revendications précédentes, dans lequel l'élément de retenue d'écrou comprend une partie filetée d'accouplement de capuchon (115).

6. Ensemble de retenue d'écrou selon la revendication 5, comprenant en outre un capuchon (160) en prise filetée avec la partie filetée d'accouplement de capuchon (115).

7. Ensemble de retenue d'écrou selon la revendication 6, dans lequel le capuchon est constitué d'un matériau non conducteur, en particulier d'un matériau polymère transparent non conducteur.

8. Ensemble de retenue d'écrou selon l'une quelconque des revendications précédentes, dans lequel la base déformable par matage ou l'ensemble base déformable par matage est un ensemble base déformable par matage (320) comprenant : i) un premier composant de base (330) comprenant la section déformable par matage (321) et la collerette radiale (322) ; et ii) un second composant de base (340) comprenant la partie filetée d'accouplement de la base (323), dans lequel le premier composant de base (330) inclut une première partie filetée d'accouplement de composant (331) destinée à s'accoupler à une seconde partie filetée d'accouplement de composant (341) du second composant de base (340).

9. Ensemble de retenue d'écrou selon l'une quelconque des revendications précédentes, dans lequel la base déformable par matage comprend une partie filetée d'accouplement de capuchon (225, 325), dans lequel, facultativement, l'ensemble de retenue d'écrou comprend en outre un capuchon (260, 360) en prise filetée avec la partie filetée d'accouplement de capuchon (225, 325).

10. Système de fixation aveugle (1), comprenant :
un élément de fixation (10) comprenant une partie tête (11) et une partie tige filetée (12) ;
un premier substrat (20) comprenant un premier trou traversant (21) dimensionné pour permettre un premier ajustement avec jeu pour l'élément de fixation et délimitant une première surface de serrage (22) destinée à recevoir l'élément de fixation, le premier substrat (20) délimitant une première surface de travail (23) ;
un second substrat (30) comprenant un second trou traversant (31) dimensionné pour permettre un second ajustement avec jeu pour l'élément de fixation et délimitant une seconde surface de serrage (32) faisant face à la première surface de serrage, le second substrat délimitant en outre une seconde surface de travail (33) destinée à recevoir l'élément de fixation (10) ;
un écrou de fixation (150, 250, 350) destiné à être placé sur la première surface de travail du premier substrat au-dessus du premier alésage traversant, l'écrou de fixation comprenant un alésage fileté (151, 152, 153) ; et
un ensemble de retenue d'écrou (100, 200, 300) selon l'une quelconque des revendications 1 à 9, façonné pour retenir l'écrou de fixation sur la première surface de travail du premier substrat, l'ensemble de retenue d'écrou comprenant une section déformable par matage (121, 221, 321) destinée à s'accoupler par matage dans le premier trou traversant du premier substrat,
dans lequel, lorsque l'écrou de fixation est disposé dans l'ensemble de retenue d'écrou, le premier trou traversant du premier substrat, le second trou traversant du second substrat et l'alésage fileté de l'écrou de fixation permettent l'insertion de l'élément de fixation et la mise en prise filetée de la partie de tige filetée de l'élément de fixation avec l'alésage fileté de l'écrou de fixation.

11. Système de fixation aveugle selon la revendication 10, comprenant en outre une surface anti-rotation (114, 214, 314) de l'ensemble de retenue d'écrou (100, 200, 300) en prise avec l'écrou de fixation (150, 250, 350).

12. Système de fixation aveugle selon la revendication 10 ou la revendication 11, comprenant en outre un capuchon (160, 260, 360) en prise filetée avec l'ensemble de retenue d'écrou (100, 200, 300).

13. Système de fixation aveugle selon la revendication 12, dans lequel le capuchon est constitué d'un matériau non conducteur, en particulier d'un matériau polymère transparent non conducteur.

14. Procédé de fixation (400), consistant à :
positionner (404) une section déformable par matage (121, 221, 321) d'un ensemble de retenue d'écrou (100, 200, 300) selon l'une quelconque des revendications 1 à 9 dans un premier trou traversant (21) d'un premier substrat (20), dans lequel un écrou de fixation (150, 250, 350) est disposé dans l'ensemble de retenue d'écrou ;
à accoupler par matage (406) la section déformable par matage dans le premier trou traversant ;
à insérer (408) un élément de fixation (10) à travers le premier trou traversant et dans l'ensemble de retenue d'écrou ; et
à mettre en prise filetée (410) l'élément de fixation avec l'écrou de fixation disposé dans l'ensemble de retenue d'écrou.

15. Procédé de fixation selon la revendication 14, consistant en outre à :
pré-percer (402) le premier trou traversant à travers le premier substrat au niveau d'un emplacement prédéterminé pour l'ensemble de retenue d'écrou, et/ou
mettre en prise (412) une surface anti-rotation (114, 214, 314) de l'ensemble de retenue d'écrou (100, 200, 300) avec l'écrou de fixation (150, 250, 350), et/ou
à accoupler (414) un capuchon (160, 260, 360) sur l'ensemble de retenue d'écrou (100, 200, 300).
